# FASCICULE DE BREVET EUROPEEN

(11) **EP 1 171 272 B1**
(45) Date de publication et mention de la délivrance du brevet: **30.06.2004**
(21) Numéro de dépôt: 00925343.6
(22) Date de dépôt: 14.04.2000
(51) Int. Cl.: B29C 33/48, B29C 70/44

(54) **OUTILLAGE DE MISE EN FORME POUR LA POLYMERISATION DE PIECES PROFILEES EN MATERIAU COMPOSITE**
FORMVORRICHTUNG ZUM POLYMERISIEREN VON PROFILIERTEN TEILEN AUS VERBUNDWERKSTOFF
FORMING EQUIPMENT FOR POLYMERISATION OF SHAPED PARTS IN COMPOSITE MATERIAL

(30) Priorité: 16.04.1999 FR 9904801
(43) Date de publication de la demande: 16.01.2002
(73) Titulaire: EADS CCR, 75016 Paris (FR)
(72) Inventeur: ANDRE, Joel, F-78380 Bougival (FR)
(74) Mandataire: Poulin, Gérard
(86) Numéro de dépôt international: PCT/FR2000/000968
(87) Numéro de publication internationale: WO 2000/062993

(56) Documents cités:
- US-A- 4 591 400
- US-A- 5 817 269

## Description

### Domaine technique

L'invention concerne un outillage de mise en forme, destiné à être utilisé lors de la fabrication de pièces profilées en matériau composite, pour assurer la polymérisation finale de ces pièces. Elle s'applique notamment à la fabrication de pièces présentant une section en U ou en L.

### Etat de la technique

Selon une technique de fabrication classique, les pièces profilées en matériau composite présentant notamment une section en U ou en L sont généralement obtenues en drapant des tissus ou des nappes de fibres imprégnées de résine thermodurcissable ou thermoplastique afin d'obtenir une ébauche de pièce présentant la forme et les dimensions souhaitées, puis en polymérisant cette ébauche de pièce dans un autoclave.

Habituellement, l'étape finale de polymérisation est réalisée au moyen d'un outillage de mise en forme comprenant un moule métallique rigide, en forme de poinçon, sur lequel est placée l'ébauche de pièce. L'outillage comprend également une vessie étanche qui recouvre extérieurement l'ébauche de pièce et à l'intérieur de laquelle on fait le vide, afin d'assurer la mise en forme de l'ébauche en pressant celle-ci contre le moule en forme de poinçon.

Cet outillage est placé dans un autoclave, afin de subir le cycle de température et de pression nécessaire à la polymérisation de la résine utilisée.

Ce cycle comprend une montée en température, au cours de laquelle le moule métallique se dilate. Lorsque la polymérisation de la résine est achevée, l'outillage et la pièce qu'il contient sont refroidis progressivement jusqu'à la température ambiante. Durant ce refroidissement, le retrait de la pièce durcie est très inférieur à celui du moule métallique en forme de poinçon. La pièce est donc aisément démoulée lorsque l'outillage est extrait de l'autoclave.

Cette technique de fabrication classique est satisfaisante dans un certain nombre de cas. Toutefois, elle est inadaptée lorsque les pièces profilées que l'on désire fabriquer doivent présenter une surface extérieure calibrée, c'est-à-dire lorsque cette surface doit être pratiquement exempte de défauts géométriques et lorsque ses dimensions doivent être maîtrisées avec précision. Cette exigence apparaît notamment quand les surfaces fonctionnelles des pièces à fabriquer sont les surfaces extérieures de ces pièces.

En effet, dans la technique classique décrite précédemment, la surface extérieure des pièces profilées est mise en forme directement par la vessie souple et étanche. Elle présente donc nécessairement des défauts géométriques et dimensionnels incontrôlables.

### Exposé de l'invention

L'invention a précisément pour objet un outillage de mise en forme, destiné à la polymérisation de pièces profilées en matériau composite, dont la conception originale lui permet de réaliser des pièces dont la surface extérieure est pratiquement exempte de défauts géométriques et dimensionnels, et présentant des caractéristiques mécaniques analogues à celle qui sont obtenues avec les outillages existants, sans modifier fondamentalement la technique de polymérisation.

Conformément à l'invention, ce résultat est obtenu au moyen d'un outillage de mise en forme, pour la polymérisation de pièces profilées en matériau composite, comprenant un moule rigide et des moyens de mise en forme, aptes à presser une ébauche de pièce contre le moule rigide. Un tel outillage est, par exemple, décrit dans le document US-A-5 817 269. L' outillage selon l'invention est caractérisé en ce que le moule rigide est formé de plusieurs éléments non liés entre eux, des moyens de maintien étant prévus pour garder lesdits éléments normalement en appui les uns contre les autres, de façon à définir une cavité apte à recevoir l'ébauche de pièce, tout en autorisant un écartement relatif desdits éléments lors d'une phase de refroidissement consécutive à la polymérisation de l'ébauche.

Selon l'invention, le calibrage de la surface extérieure de la pièce est obtenu en utilisant un moule en creux, présentant une cavité dans laquelle est placée l'ébauche de pièce.

Par ailleurs, le retrait du moule qui se produit lors de la phase de refroidissement qui suit la polymérisation, est sans conséquence sur les caractéristiques mécaniques de la pièce. En effet, la réalisation du moule en plusieurs éléments indépendants permet à ces éléments de s'écarter les uns des autres lors du refroidissement. La pièce ne subit donc pas de contraintes excessives dues au retrait du moule. En outre, le maintien des éléments constituant le moule en appui les uns contre les autres pendant toute la durée de la polymérisation, garantit l'obtention de la forme et des dimensions désirées.

Dans un mode de réalisation préféré de l'invention, les moyens de maintien comprennent des moyens pour appliquer une pression sur une face extérieure d'au moins l'un des éléments du moule, de façon à solliciter cet élément vers un élément adjacent.

De préférence, bien que de façon non impérative, la face extérieure de cet élément est sensiblement parallèle à une face intérieure, délimitant la cavité, dudit élément ou d'une contre-forme placée à l'intérieur de celui-ci.

Dans le mode de réalisation préféré de l'invention, les éléments du moule rigide sont placés dans une enveloppe rigide. Les moyens d'application de pression comprennent alors soit au moins une paroi souple raccordée de façon étanche sur l'enveloppe, soit une vessie étanche prenant appui sur l'enveloppe. La paroi souple ou la vessie étanche est agencée de façon à être appliquée par pression contre la face extérieure de l'élément correspondant.

Lorsque la pièce à fabriquer présente une section en U, le moule rigide forme une cavité qui présente également une section en U. De plus, le moule comprend un élément central matérialisant le fond de la cavité et deux éléments d'extrémité matérialisant les flancs de la cavité. Les moyens de maintien gardent alors normalement les éléments d'extrémité en appui contre des bords latéraux de l'élément central.

Dans ce cas, les moyens d'application de pression comprennent soit deux parois souples aptes à être appliquées, par pression, contre les faces extérieures de chacun des éléments d'extrémité, soit deux vessies étanches aptes à être appliquées contre lesdites faces extérieures, sous l'effet de la pression délivrée par une source de pression extérieure.

Lorsque des parois souples sont utilisées, elles sont soumises à la pression extérieure.

Par ailleurs, la cavité peut présenter une section variable ou uniforme sur toute sa longueur.

### Brève description des dessins

On décrira à présent, à titre d'exemples non limitatifs, différents modes de réalisation de l'invention, en se référant aux dessins annexés, dans lesquels :
- la figure 1 est une vue en coupe transversale représentant un outillage conforme à l'invention, appliqué à la fabrication d'une pièce profilée à section en forme de U, dans l'état qu'il occupe avant la polymérisation de l'ébauche (en trait plein) et lorsque la température de polymérisation est atteinte (en trait discontinu) ;
- la figure 2 est une vue en coupe comparable à la figure 1, représentant l'état de l'outillage après le refroidissement de la pièce ;
- la figure 3 est une vue en coupe schématique illustrant une variante de réalisation de l'outillage, appliquée à la fabrication d'une pièce en U ou en L présentant un flanc ouvert ;
- la figure 4 est une vue en coupe schématique comparable à la figure 3, illustrant une variante de réalisation de l'outillage, appliquée à la fabrication d'une pièce en U présentant un flanc fermé ; et
- la figure 5 est une vue en perspective illustrant un autre mode de réalisation de l'outillage selon l'invention, appliquée à la fabrication d'une pièce en U de section variable, dans lequel les parois souples de l'outillage sont remplacées par des vessies étanches reliées à une source de pression extérieure indépendante.

### Description détaillée de plusieurs modes de réalisation préférés de l'invention

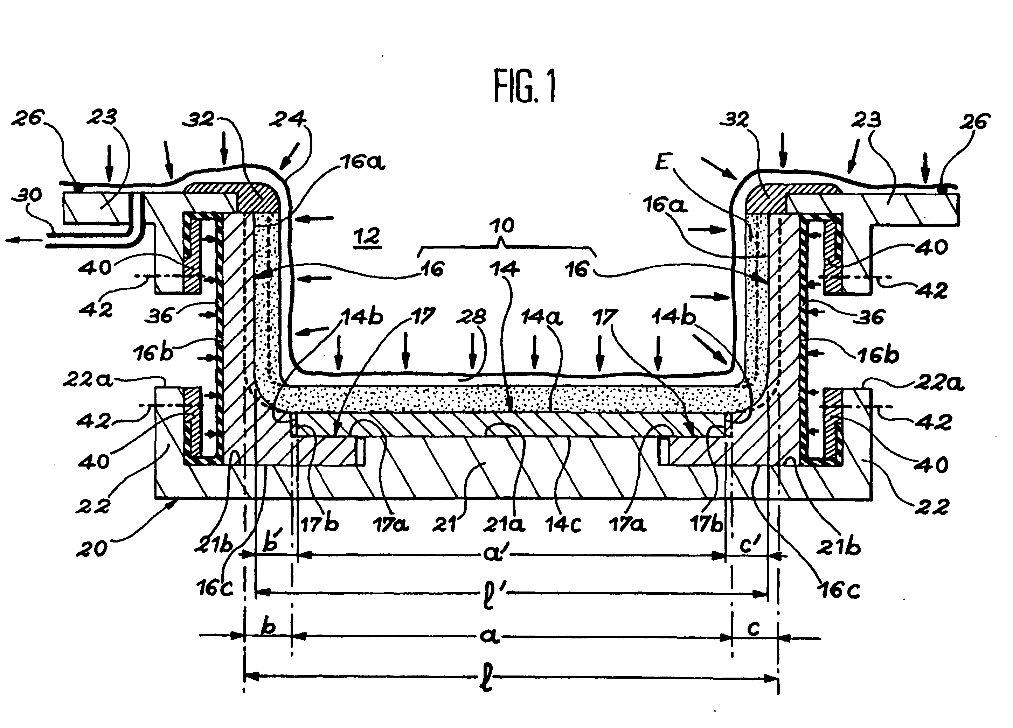

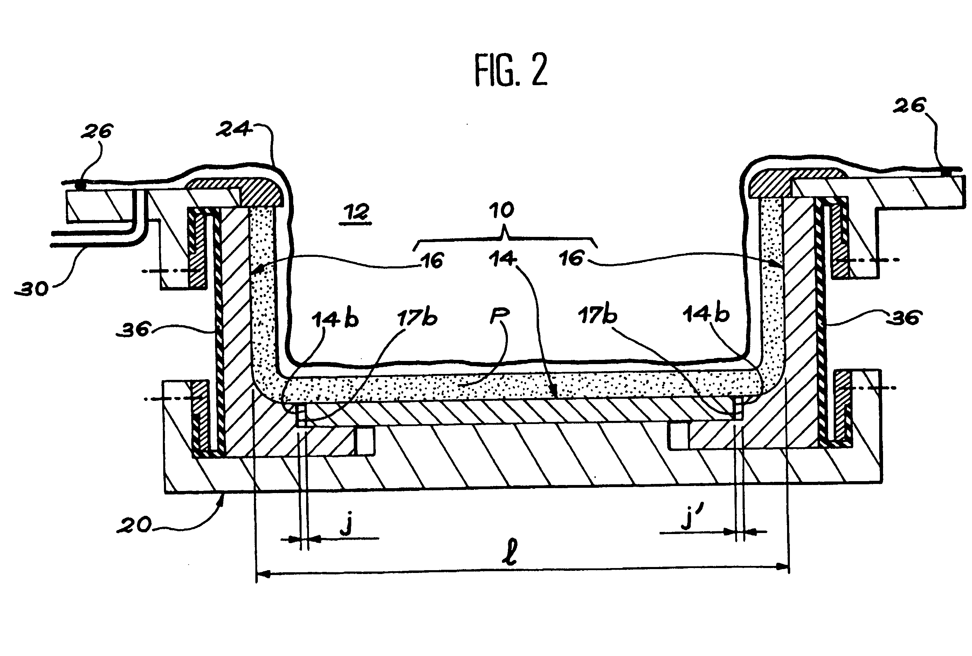

Les figures 1 et 2 représentent un premier mode de réalisation d'un outillage de mise en forme selon l'invention, appliqué à la fabrication d'une pièce à section en forme de U, dans l'état initial de l'outillage (en trait plein sur la figure 1) à la fin de la polymérisation (en trait discontinu sur la figure 1) et après le refroidissement (figure 2).

Conformément à l'invention, l'outillage comprend un moule métallique rigide 10, qui délimite intérieurement une cavité 12, ouverte sur sa face supérieure. Dans ce mode de réalisation, et de façon nullement limitative, la cavité 12 présente une section rectangulaire.

Plus précisément, dans le mode de réalisation représenté, le moule métallique rigide 10 comprend un élément central 14 et deux éléments d'extrémité 16.

L'élément central 14 présente ici la forme d'une plaque rectangulaire plane, dont la face supérieure 14a matérialise le fond de la cavité 12. Les bords latéraux 14b de la plaque sont perpendiculaires à sa face supérieure 14a.

Les éléments d'extrémité 16 sont identiques l'un à l'autre et présentent en section sensiblement la forme d'un L. La branche formant la base du L est plus épaisse que l'élément central 14 et présente, sur sa face intérieure, une entaille 17 complémentaire d'une partie latérale correspondante de l'élément central, de telle sorte que ladite partie latérale vient se loger dans cette entaille. Plus précisément, chacune des entailles 17 formées dans les éléments d'extrémité 16 comprend un fond 17a contre lequel vient normalement en appui la face inférieure 14c de l'élément central 14 et un bord latéral plan 17b contre lequel vient normalement en appui le bord latéral 14b correspondant de l'élément central 14, comme l'illustre la figure 1. Dans ces conditions, la face intérieure 16a de chacun des éléments d'extrémité 16 matérialise les côtés de la cavité 12.

Plus précisément, la face intérieure 16a de chacun des éléments d'extrémité 16 comprend une partie principale plane, ici perpendiculaire à la face supérieure 14a de l'élément central 14, et une partie de liaison à section en quart de cercle, qui relie sans discontinuité ladite partie principale plane à la face supérieure 14a.

Chacun des éléments d'extrémité 16 comprend de plus une face extérieure plane 16b, parallèle à la partie principale plane de la face intérieure 16a.

Les éléments 14 et 16 du moule métallique 10 sont réalisés dans des matériaux qui sont choisis en tenant compte notamment des dimensions de la pièce à fabriquer. Ainsi, dans le cas d'une pièce de relativement petites dimensions, l'élément central 14 est réalisé par exemple en acier et les éléments d'extrémité 16 sont réalisés en alliage léger. Au contraire, dans le cas d'une pièce de relativement grandes dimensions, l'élément central 14 est réalisé par exemple en un alliage à dilatation contrôlée et les éléments d'extrémité 16 sont réalisés en acier.

Les éléments 14 et 16 du moule métallique 10 sont placés dans une enveloppe 20 rigide, également métallique. L'enveloppe 20 peut notamment être réalisée en acier.

Plus précisément, l'enveloppe 20 comporte un fond 21 en gradin, présentant une partie centrale plus épaisse, dotée d'une face supérieure plane 21a sur laquelle repose la face inférieure plane 14c de l'élément central 14 du moule 10. Les parties latérales, plus minces, du fond de l'enveloppe 20 comprennent des faces supérieures planes 21b qui supportent les éléments d'extrémité 16 du moule, de telle sorte que ces éléments puissent coulisser latéralement sous l'effet de la dilatation de l'élément central 14, comme on le comprendra ultérieurement.

Plus précisément, chacun des éléments d'extrémité 16 repose par une face inférieure plane 16c sur la face supérieure plane 21b de la partie latérale correspondante du fond 21 de l'enveloppe 20.

L'enveloppe 20 comprend de plus deux parois latérales 22 qui encadrent les éléments d'extrémité 16 du moule, tout en étant suffisamment écartées de ces éléments pour permettre leur déplacement vers l'extérieur, sous l'effet de la dilatation de l'élément central 14, tel qu'indiqué précédemment. Dans le mode de réalisation représenté sur les figures 1 et 2, chacune des parois latérales 22 de l'enveloppe 20 comporte une ouverture 22a permettant à l'atmosphère extérieure de pénétrer entre cette paroi et l'élément d'extrémité 16 correspondant.

L'enveloppe 20 comporte en outre une paroi supérieure 23, totalement ouverte au-dessus de la cavité 12, et dont la face inférieure coopère par glissement avec le bord supérieur de chacun des éléments d'extrémité 16 du moule 10, de façon à contribuer au maintien de ces éléments à l'intérieur de l'enveloppe 20.

L'outillage conforme à l'invention comprend de plus des moyens de mise en forme d'une ébauche de pièce E apte à être placée dans la cavité 12 du moule 10. Ces moyens de mise en forme comprennent une vessie 24 souple et étanche, qui recouvre intégralement la face intérieure de l'ébauche de pièce E et s'étend latéralement, de part et d'autre de la cavité 12, au-dessus de la paroi supérieure 23 de l'enveloppe rigide 20. Sur toute la périphérie de la vessie étanche 24, un bourrelet d'étanchéité 26 est interposé entre la vessie et l'enveloppe rigide 20, de façon à emprisonner l'ébauche de pièce E dans un volume clos 28, délimité par ailleurs par le moule 10.

Des moyens sont prévus pour relier le volume clos 28 à une source de vide. Dans le mode de réalisation illustré sur les figures 1 et 2, ces moyens comprennent un tube 30 débouchant au-dessus de la paroi supérieure 23 de l'enveloppe 20, à l'intérieur du volume clos 28.

Afin d'éviter que la vessie 24 souple et étanche ne soit en contact avec des arêtes vives risquant de l'endommager prématurément, deux réglettes 32 sont placées sur la partie du bord supérieur de chacun des éléments d'extrémité 16 non recouverte par la paroi supérieure 23 de l'enveloppe 20. Chacune des réglettes 32 se prolonge au-dessus du bord supérieur du flanc correspondant de l'ébauche de pièce E.

Conformément à l'invention, l'outillage comprend également des moyens de maintien, grâce auxquels chacun des éléments d'extrémité 16 du moule 10 est maintenu normalement en appui contre le bord latéral 14b correspondant de l'élément central 14, comme l'illustre la figure 1.

Dans le mode de réalisation illustré sur les figures 1 et 2, ces moyens de maintien comprennent des moyens permettant d'appliquer une pression sur la face extérieure 16b de chacun des éléments 16, de façon à solliciter ces derniers vers l'élément central 14. Dans ce cas, les moyens d'application de pression sont constitués par deux parois souples et étanches 36, dont les bords périphériques sont fixés de façon étanche sur l'enveloppe 20, et dont la partie centrale est maintenue en appui contre la face extérieure 16b de l'élément d'extrémité 16 correspondant, sous l'action de la pression régnant à l'extérieur du moule et admise par les ouvertures 22a.

De façon plus précise, chacune des parois souples et étanches 36 est logée dans l'espace formé dans ce cas entre l'élément d'extrémité 16 correspondant et la paroi latérale 22 adjacente de l'enveloppe 20. Les bords périphériques de chacune des parois souples et étanches 36 sont fixés à l'intérieur des parois latérales 22 de l'enveloppe, autour des ouvertures 22a, par exemple au moyen de plaques 40 assujetties auxdites parois latérales par des moyens de fixation tels que des vis ou des boulons, illustrés par des traits mixtes 42 sur la figure 1.

Lors de la fabrication d'une pièce profilée à section en forme de U, on réalise dans un premier temps une ébauche de pièce E, par drapage de tissus ou de nappes de fibres imprégnées de résine thermodurcissable ou thermoplastique. L'ébauche de pièce E est ensuite placée dans la cavité 12 du moule 10 et les réglettes 32 et 34 sont mises en place. Enfin, l'opérateur monte la vessie 24 souple et étanche, de la manière décrite et illustrée. L'outillage est alors prêt à être placé dans un autoclave, dans lequel on soumet l'ébauche de pièce au cycle de polymérisation correspondant à la résine utilisée.

Lorsque l'outillage contenant l'ébauche de pièce E est à température ambiante, avant le début de la polymérisation, la distance ℓ' (figure 1) séparant les faces intérieures 16a des éléments d'extrémité 16 du moule 10 est égale à la largeur a' de l'élément central 14 du moule, augmentée des distances b' et c' qui existent alors entre les faces intérieures 16a et les bords latéraux 17b maintenus en appui contre les bords latéraux 14b de l'élément central 14 par les parois souples et étanches 36 et 38.

Pour mettre en oeuvre la polymérisation, le volume 28 dans lequel se trouve l'ébauche de pièce E est mis sous vide par le tube 30. En revanche, les surfaces extérieures de la vessie 24 souple et étanche et des parois 36 restent soumises à la pression qui règne à l'intérieur de l'autoclave. Par conséquent, l'ébauche de pièce E est pressée contre les surfaces 14a et 16a de la cavité du moule 12 par la vessie 24 et les éléments d'extrémité 16 sont maintenus en contact avec les bords latéraux 14b de l'élément central 14 par les parois souples et étanches 36.

Lors de la montée en température imposée par le cycle de polymérisation, la pression augmente corrélativement. Toutefois, le maintien en contact des éléments 14 et 16 du moule 10 reste assuré, du fait que l'action de la pression sur les faces intérieures des deux flancs de l'ébauche de pièce E, par l'intermédiaire de la vessie 24, est contrecarrée par l'action de cette même pression sur les parois souples et étanches 36.

En revanche, l'accroissement de la température se traduit par une dilatation progressive des différentes pièces de l'outillage et notamment des éléments constitutifs du moule 10. Cette dilatation se poursuit jusqu'à la polymérisation de l'ébauche de pièce E. La distance ℓ séparant les faces intérieures 16a des éléments d'extrémité 16 du moule 10 est donc supérieure à la distance correspondante ℓ' à température ambiante, comme on l'a illustré de façon volontairement exagérée sur la figure 1. Cette distance ℓ détermine la distance qui séparera les faces extérieures des deux flancs de la pièce finalement obtenue. Les dimensions a', b' et c', caractéristiques des éléments 14 et 16 du moule à température ambiante, sont donc déterminées afin que la somme des dimensions correspondante a, b et c à la température de polymérisation soit égale à la distance ℓ désirée.

Lorsque la pièce P est polymérisée et donc rigidifiée, l'outillage est refroidi progressivement. Il en découle un retrait de la pièce P (figure 2) et des éléments constitutifs de l'outillage. Toutefois, le coefficient de dilatation de la pièce en matériau composite étant très inférieur au coefficient de dilatation des éléments métalliques de l'outillage, le retrait de ces derniers éléments est beaucoup plus important que celui de la pièce. En particulier, le retrait des éléments 14 et 16 constituant le moule 10 est tel qu'un jeu j, j' est créé entre chacun des bords latéraux 14b de l'élément central 14 et les bords latéraux 17b de l'entaille 17 formée dans l'élément d'extrémité 16 correspondant. Cette caractéristique permet, conformément à l'invention, d'éviter que le retrait du moule n'ait pour effet d'endommager la pièce P ainsi obtenue.

Les parois souples 36 compensent également la dilatation et le retrait de l'enveloppe 20.

Par conséquent, l'outillage conforme à l'invention permet de fabriquer une pièce profilée P en matériau composite, dont les surfaces extérieures présentent des dimensions et des états de surface parfaitement contrôlés.

Dans le mode de réalisation qui vient d'être décrit en se référant aux figures 1 et 2, la pièce fabriquée présente une section en forme de U et ses deux flancs, ou bords tombés, sont orientés perpendiculairement au fond de cette même pièce. Dans ce cas, les faces extérieures 16b des éléments d'extrémité 16 du moule, sur lesquelles agissent les parois souples et étanches 36, sont orientées parallèlement aux faces intérieures 16a de ces mêmes éléments, c'est-à-dire parallèlement aux flancs de la pièce.

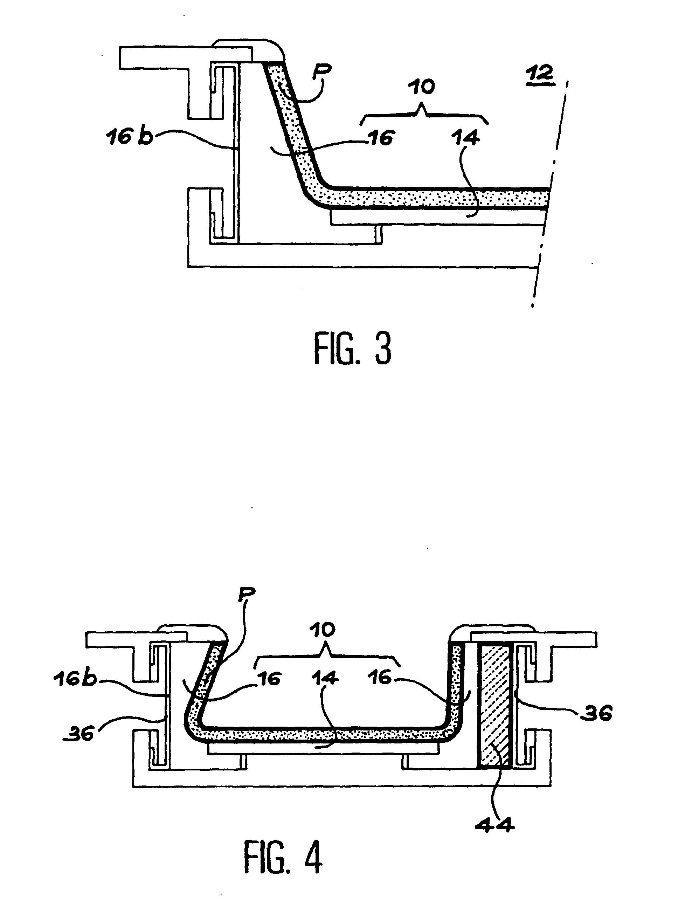

Comme l'illustre schématiquement la figure 3, la pièce P à fabriquer peut également présenter au moins un flanc ou bord tombé ouvert, c'est-à-dire formant un angle obtus avec le fond. Dans ce cas, la face extérieure 16b de l'élément d'extrémité 16 correspondant du moule 10 garde avantageusement la même orientation que précédemment, c'est-à-dire une orientation perpendiculaire au fond de la pièce ou à l'élément central 14 du moule.

Il est à noter que la réalisation d'une pièce comprenant un flanc ouvert comme l'illustre la figure 3 peut aussi être assurée en utilisant un outillage identique à celui qui a été décrit précédemment en se référant aux figures 1 et 2, et en interposant une contre-forme entre l'élément d'extrémité 16 correspondant du moule 10 et le flanc ouvert de la pièce.

Dans l'un et l'autre des deux cas précédents, c'est-à-dire lorsqu'on désire fabriquer une pièce P présentant un flanc ouvert, la surface extérieure 16b de l'élément d'extrémité 16 correspondant du moule, sur laquelle prend appui la paroi souple et étanche 36, peut aussi être orientée parallèlement à la surface intérieure 16a correspondante de la cavité 12, formée selon le cas soit directement sur l'élément d'extrémité 16, soit à l'intérieur du contre-moule.

Comme on l'a illustré schématiquement sur la figure 4, un outillage conforme à l'invention peut aussi être utilisé pour fabriquer une pièce profilée P comprenant au moins un flanc ou bord tombé fermé, c'est-à-dire formant un angle aigu avec le fond. Dans ce cas, la surface extérieure 16b de l'élément d'extrémité 16 du moule 10 correspondant à ce flanc fermé reste de préférence orientée perpendiculairement au fond de la pièce, c'est-à-dire à l'élément central 14.

Pour permettre le démoulage de la pièce, on adjoint alors avantageusement à l'outillage une clé 44, de section rectangulaire, que l'on interpose entre l'un des éléments d'extrémité 16 du moule et la paroi souple et étanche 36 correspondante. Lorsque l'outillage est refroidi, cette clé 44 est démontée et autorise l'écartement des éléments d'extrémité 16 du moule, suffisamment pour permettre l'extraction vers le haut de la pièce P obtenue.

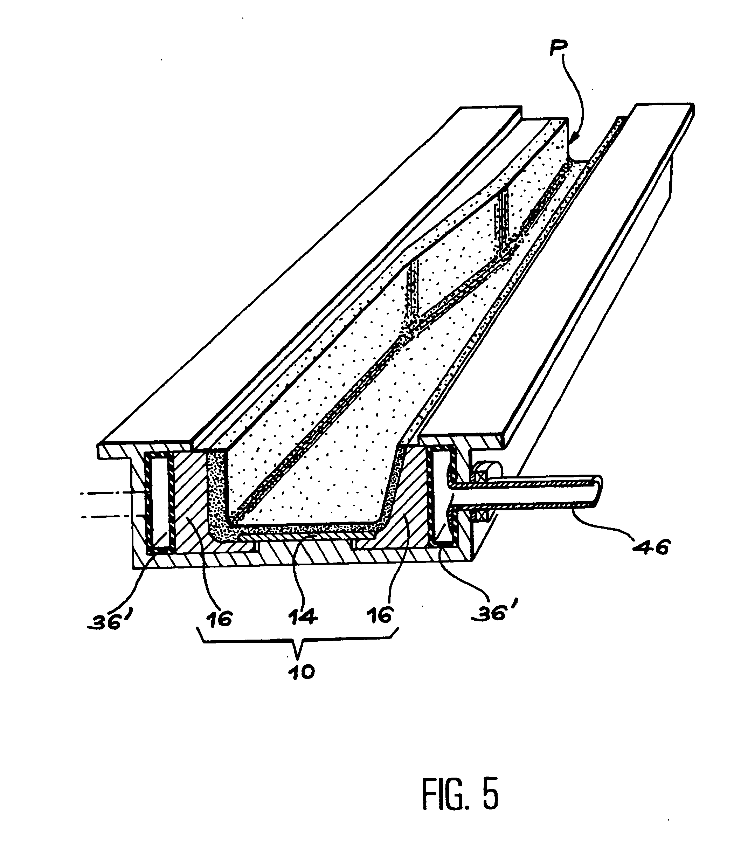

Comme on l'a représenté également sur la figure 5, l'outillage selon l'invention permet également de fabriquer une pièce P présentant une ou plusieurs parties renforcées, de plus forte épaisseur, par exemple sur l'un de ses flancs.

De même, au lieu de présenter une section uniforme et de dimension constante d'une extrémité à l'autre, comme dans les modes de réalisation précédents la pièce à fabriquer peut présenter une section variable ou évolutive, sans sortir du cadre de l'invention. Ce résultat peut être obtenu aisément en donnant à un ou plusieurs des éléments 14 et 16 constituant le moule 10 la forme et les dimensions appropriées.

Comme l'illustre également la figure 5, dans l'hypothèse où la pression régnant à l'intérieur de l'autoclave ne serait pas adaptée pour permettre le maintien en contact des différents éléments constituant le moule tout au long du cycle de polymérisation, il est possible de remplacer les parois souples et étanches 36 par des vessies étanches 36' délimitant chacune un espace clos, apte à être relié à une source de pression extérieure (non représentée) par un tube 46 approprié.

Lorsque des parois souples 36 soumises à la pression régnant dans l'autoclave sont utilisées, la fixation de ces parois sur l'enveloppe 20 peut être réalisée de manière quelconque sans sortir du cadre de l'invention. Ainsi, les parois latérales 22 de l'enveloppe 20 peuvent notamment être supprimées. Les parois souples et étanches 36 sont alors fixées directement sur le fond 21 et la paroi supérieure 23 de l'enveloppe 20, ainsi que sur des pièces (non représentées) reliant le fond à la paroi supérieure à chacune des extrémités de l'outillage.

Il est à noter que l'outillage selon l'invention peut aussi être utilisé pour fabriquer des pièces dont la section n'est pas en forme de U mais, par exemple, en forme de L. Le nombre des éléments constituant le moule 10 peut alors être réduit à deux, de même que celui des moyens 36 d'application de pression. En outre, des joints d'étanchéité peuvent être interposés, si nécessaire, entre les bords normalement en contact des différents éléments formant le moule, afin d'éviter la pénétration de la résine entre ces éléments, lors de la polymérisation.

## Revendications

1. Outillage de mise en forme, pour la polymérisation de pièces profilées en matériau composite, comprenant un moule rigide (10) et des moyens (24) de mise en forme, aptes à presser une ébauche (E) de pièce contre le moule rigide, outillage **caractérisé en ce que** le moule rigide (10) est formé de plusieurs éléments (14,16) non liés entre eux, des moyens (36,36') de maintien étant prévus pour garder lesdits éléments normalement en appui les uns contre les autres, de façon à définir une cavité (12) apte à recevoir l'ébauche (E) de pièce, tout en autorisant un écartement relatif desdits éléments (14,16) lors d'une phase de refroidissement consécutive à la polymérisation de l'ébauche.

2. Outillage selon la revendication 1, dans lequel les moyens de maintien comprennent des moyens (36,36') pour appliquer une pression sur une face extérieure (16b) d'au moins l'un (16) des éléments, de façon à solliciter celui-ci vers un élément (14) adjacent.

3. Outillage selon la revendication 2, dans lequel ladite face extérieure (16b) est sensiblement parallèle à une face intérieure (16a), délimitant la cavité (12), de l'élément (16) sur lequel elle est formée, ou d'une contre-forme placée à l'intérieur de cet élément.

4. Outillage selon l'une quelconque des revendications 2 et 3, dans lequel les éléments (14,16) du moule rigide (10) sont placés dans une enveloppe rigide (20) et les moyens d'application de pression comprennent au moins une paroi souple (36) raccordée de façon étanche sur l'enveloppe (20) et apte à être appliquée par pression contre ladite face extérieure (16b).

5. Outillage selon l'une quelconque des revendications 2 et 3, dans lequel les éléments (14,16) du moule rigide (10) sont placés dans une enveloppe rigide (20) et les moyens d'application de pression comprennent au moins une vessie étanche (16') prenant appui sur l'enveloppe (20) et apte à être appliquée par pression contre ladite face extérieure (16b).

6. Outillage selon l'une quelconque des revendications précédentes, dans lequel le moule rigide (10) forme une cavité (12) présentant une section en U et comprend un élément central (14) matérialisant le fond de la cavité et deux éléments d'extrémité (16) matérialisant les flancs de la cavité, les moyens de maintien (36) gardant normalement les éléments d'extrémité en appui contre des bords latéraux (14b) de l'élément central (14).

7. Outillage selon les revendications 4 et 6 combinées, dans lequel les moyens d'application de pression comprennent deux parois souples (36) aptes à être appliquées, par pression, contre lesdites faces extérieures (16b) de chacun des éléments d'extrémité (16).

8. Outillage selon l'une quelconque des revendications 4 et 7, dans lequel les parois souples (36) sont soumises à la pression extérieure.

9. Outillage selon les revendications 5 et 6 combinées, dans lequel les moyens d'application de pression comprennent deux vessies étanches (36') aptes à être appliquées contre lesdites faces extérieures (16b) de chacun des élément d'extrémité (16), sous l'effet de la pression délivrée par une source de pression extérieure.

10. Outillage selon l'une quelconque des revendications précédentes, dans lequel la cavité (12) présente une section uniforme sur toute sa longueur.

11. Outillage selon l'une quelconque des revendications 1 à 9, dans lequel la cavité (12) présente une section variable, d'une extrémité à l'autre.

## Patentansprüche

1. Formgebungswerkzeug für die Polymerisierung von Profilteilen aus Verbundmaterial mit einer starren Form (10) und Formgebungsmitteln (24), die geeignet sind, ein Rohteil (E) gegen die starre Form zu pressen, wobei das Werkzeug **dadurch gekennzeichnet ist, dass** die starre Form (10) aus mehreren, nicht miteinander verbundenen Elementen (14,16) gebildet ist, wobei Halte- bzw. Stützmittel (36,36') vorgesehen sind, um die Elemente normalerweise aneinander abgestützt zu halten, so dass ein Hohlraum (12) festgelegt wird, der das Rohteil (E) aufnehmen kann, und gleichzeitig ein Abstand der Elemente (14,16) voneinander während einer an die Polymerisierung des Rohteils anschließenden Abkühlungsphase ermöglicht wird.

2. Werkzeug nach Anspruch 1, wobei die Stützmittel Mittel (36, 36') zum Aufbringen eines Drucks auf eine Außenfläche (16b) mindestens eines (16) der Elemente umfasst, so dass dieses gegen ein benachbartes Element (14) hin vorbelastet wird.

3. Werkzeug nach Anspruch 2, wobei die Außenfläche (16b) im wesentlichen parallel zu einer den Hohlraum (12) umgrenzenden Innenfläche (16a) des Elements (16), an.dem sie ausgebildet ist, oder einer innerhalb dieses Elements platzierten Gegenform ist.

4. Werkzeug nach einem der Ansprüche 2 oder 3, wobei die Elemente (14,16) der festen Form (10) in einer starren Ummantelung (20) angeordnet sind und die Druckaufbringungsmittel mindestens eine elastische Wand aufweisen, die auf abdichtende Weise mit der Ummantelung (20) verbunden ist und durch Druck an der Außenfläche (16b) angelegt werden kann.

5. Werkzeug nach einem der Ansprüche 2 und 3, wobei die Elemente (14,16) der starren Form in einer starren Ummantelung (20) angeordnet sind und die Druckaufbringungsmittel mindestens eine dichte Blase (16') umfassen, die sich an der Ummantelung (20) abstützt und durch Druck an der Außenfläche (16b) angelegt werden kann.

6. Werkzeug nach einem der vorangehenden Ansprüche, wobei die starre Form (10) einen Hohlraum (12) bildet, der einen Querschnitt in U-Form zeigt, und ein zentrales Element (14), das den Boden des Hohlraums bildet, sowie:zwei Endelemente (16), welche die Flanken des Hohlraums bilden, umfasst, wobei die Stützmittel (36) normalerweise die Endelemente in Anlage an den lateralen Rändern (14b) des zentralen Elements (14) halten.

7. Werkzeug nach Anspruch 4 und 6 in Kombination, wobei die Druckaufbringungsmittel zwei elastische Wände (36) umfassen, die durch Druck an den die Außenflächen (16b) jedes der Endelemente (16) angelegt werden können.

8. Werkzeug nach einem der Ansprüche 4 oder 7, wobei die elastischen Wände (36) dem Außendruck ausgesetzt sind.

9. Werkzeug nach Anspruch 5 und 6 in Kombination, wobei die Druckaufbringungsmittel zwei dichte Blasen (36') umfassen, die gegen die Außenflächen (16b) jedes der Endelemente (16) unter der Wirkung des von einer äußeren Druckquelle gelieferten Drucks angelegt werden können.

10. Werkzeug nach einem der vorangehenden Ansprüche, wobei der Hohlraum (12) auf seiner ganzen Länge einen gleichmäßigen Querschnitt aufweist.

11. Werkzeug nach einem der Ansprüche 1 bis 9, wobei der Hohlraum (12) von einem Ende zum andern einen variablen Querschnitt aufweist.

## Claims

1. Shaping tool for the polymerization of profiled parts made of a composite material, comprising a rigid mould (10), and shaping means (24) suitable for pushing a part blank (E) into contact with the rigid mould, the tool being **characterized in that** the rigid mould (10) is formed of several elements (14, 16) without any connection between them, holding means (36, 36') being provided to keep the said elements normally in contact with each other so as to define a cavity (12) inside which the part blank (E) can be fitted, while enabling the said elements (14, 16) to separate during a cooling phase following polymerization of the blank.

2. Tool according to claim 1, in which the holding means comprise means (36, 36') of applying a pressure on an outside face (16b) of at least one (16) of the elements in order to move it towards an adjacent element (14).

3. Tool according to claim 2, in which the said outside face (16b) is approximately parallel to an inside face (16b) delimiting the cavity (12) from the element (16) on which it is formed, or from a counter-form placed inside this elements.

4. Tool according to either of the claims 2 and 3, in which the elements (14, 16) of the rigid mould (10) are placed inside a rigid envelope (20) and the pressure application means include at least one flexible wall (36) connected in a leaktight manner on the envelope (20) and that can be forced into contact with the said external face (16b) by applied pressure.

5. Tool according to either of the claims 2 and 3, in which the elements (14, 16) of the rigid mould (10) are placed in a rigid envelope (20) and the means of applying the pressure include at least one leaktight bladder (16') bearing on the envelope (20) and that is forced into contact with the said outside face (16b) by applied pressure.

6. Tool according to any one of the previous claims, in which the rigid mould (10) forms a cavity (12) with a U-section and has a central element (14) materializing the bottom of the cavity and two end elements (16) materializing the sides of the cavity, the holding means (36) normally keeping the end elements in contact with the side edges (14b) of the central element (14).

7. Tool according to claims 4 and 6 combined, in which the means of applying pressure comprise two flexible walls (36) that can be forced into contact with the said external faces (16b) of each of the end elements (16), by applied pressure.

8. Tool according to either of the claims 4 and 7, in which external pressure is applied to the flexible walls (36).

9. Tool according to claims 5 and 6 combined, in which the means of applying pressure comprise two leaktight bladders (36') that can be applied in contact with the said outside faces (16b) of each of the end elements (16), under the effect of the pressure output by an external pressure source.

10. Tool according to any one of the previous claims, in which the cross-section of the cavity (12) is uniform along its entire length.

11. Tool according to any one of the claims 1 to 9, in which the cross-section of the cavity (12) is variable from one end to the other.
